# EUROPÄISCHE PATENTSCHRIFT

(11) **EP 1 055 781 B1**
(45) Veröffentlichungstag und Bekanntmachung des Hinweises auf die Patenterteilung: **24.03.2004**
(21) Anmeldenummer: 99122682.0
(22) Anmeldetag: 15.11.1999
(51) Int. Cl.: E03C 1/04

(54) **Zweistufen Einhandmisch-Wasserhahn**
Two-step single lever tap
Robinet mitigeur à deux pas

(30) Priorität: 25.05.1999 DE 19923899
(43) Veröffentlichungstag der Anmeldung: 29.11.2000
(73) Patentinhaber: Boehm, Hans-Georg, Dr. rer. nat., D-61476 Kronberg/Ts (DE)
(72) Erfinder: Boehm, Hans-Georg, Dr. rer. nat., D-61476 Kronberg/Ts (DE)

(56) Entgegenhaltungen:
- EP-A- 0 643 246
- EP-A- 0 819 877

## Beschreibung

### Stand der Technik :

Einhandmisch-Wasserhähne bieten den bekannten Komfort bei der stufenlosen Wahl von Wasservolumen und Temperatur. Modelle sind bekannt, die im Schwenkbereich des Haupthebels eine vorgegebene fest eingestellte, nicht überwindbare Begrenzung für eine geringere Wassermenge oder Temperatur besitzen, deren feste Begrenzung aber durch eine Hilfstaste gelöst werden kann.

Ebenfalls sind Modelle bekannt, die in einer Zwischenstellung des Haupthebels eine federnde Begrenzerstufe besitzen, die mit etwas Kraft zu überwinden ist, wenn man bspw. vollen Wasserdurchlauf wünscht.

Eine Zwischenstufe stellt daher eine nützliche Verbesserung dar, weil sie voreingestellte Sollwerte in einem einzigen treffsichen Hub einzustellen erlaubt, sonst aber alle anderen Hebelbewegungen unbehindert läßt. Aus ökologischer Sicht erhält der Benutzer eine Zusatzfunktion, die ihm das Wassersparen erleichtert.

Bei dieser Anmeldung wurden die Patentanmeldungen EP 0 643 246 A, EP 0 819 877 A, DE 19753950 A1, DE 4437370 A1, DE 3419020 A1, DE 8210359 U1, EP 426639 A1 und DE 8619277 U1 berücksichtigt.

### Problemlösung und Beschreibung :

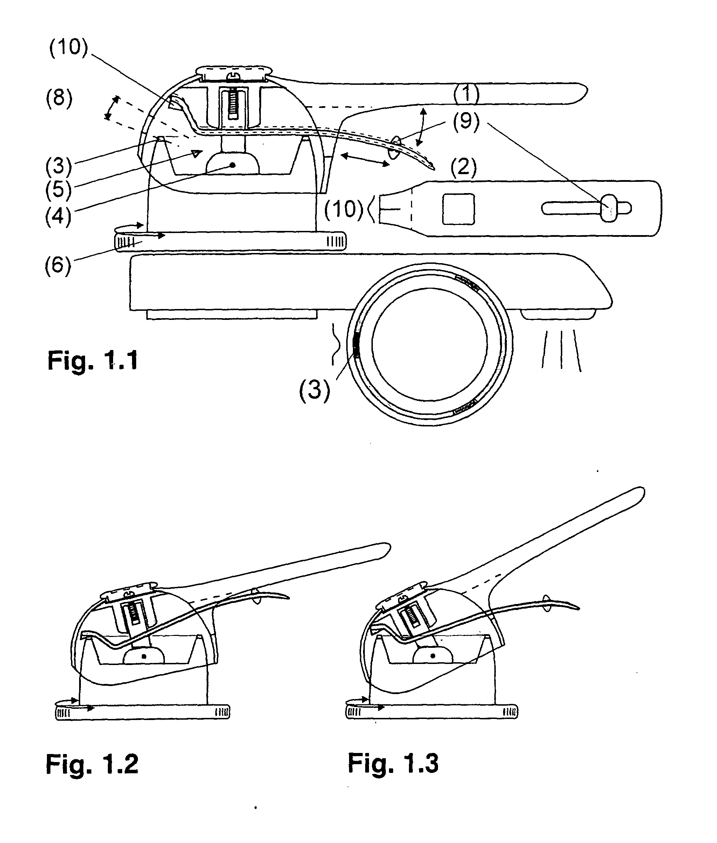

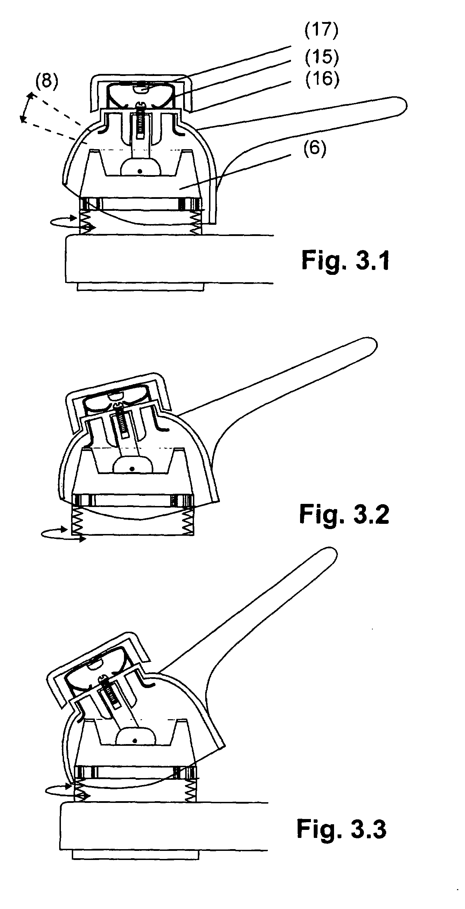

Beispielhafte Ausführungen eines Einhandmisch-Wasserhahns mit einem Hilfshebel zum sofortigen, treffsicheren Finden einer Wunschstellung des Haupthebels mit nur einem einzigen Hub sind in Fig. 1 bis 3 gezeigt.
Fig. 1 : Durch einen von unten an den Haupthebel (1) anzudrückenden Hilfshebel (2) läßt sich, ausschließlich bei Bedarf, der eingeschränkte Schwenkwinkel (8) des Haupthebels und somit der voreingestellte Wasserdurchfluß finden oder begrenzen. Dabei stößt sein inneres Ende (10) auf den oberen Rand des Korpus der Mischbatterie (3).
   Bezeichnungen in Fig. 1 (Hilfshebel unterhalb des Haupthebels) :
   Fig. 1.1 Haupthebel in Nullstellung
   Fig. 1.2 Zwischenstufe
   Fig. 1.3. Haupthebel in maximaler Öffnungsstellung
      (1) Haupthebel, nach allen Seiten aufwärts schwenkbar
      (2) Hilfshebel, nach oben an den Haupthebel heranziehbar, sorgt für eine definierte Zwischenstufe, sowohl beim Aufwärts- als auch beim Abwärtsschwenken von (1)
      (3) Wellennase oder Kerbe an der Oberkante des drehbaren Abdeckringes der Mischbatterie, definiert beim seitlichen Schwenken des Haupthebels die voreingestellte Temperatur
      (4) Drehpunkt des Mischhebels
      (5) Federelement
      (6) Rändelrand zum Drehen von (3) für die Temperaturvorwahl
      (8) Hub der Zwischenstufe
      (9) Kautschuk-Schieber auf dem Hilfshebel zur Feinjustierung der Vorwahl des Wasserdurchflußes
      (10) Sicke am inneren Ende von (2)

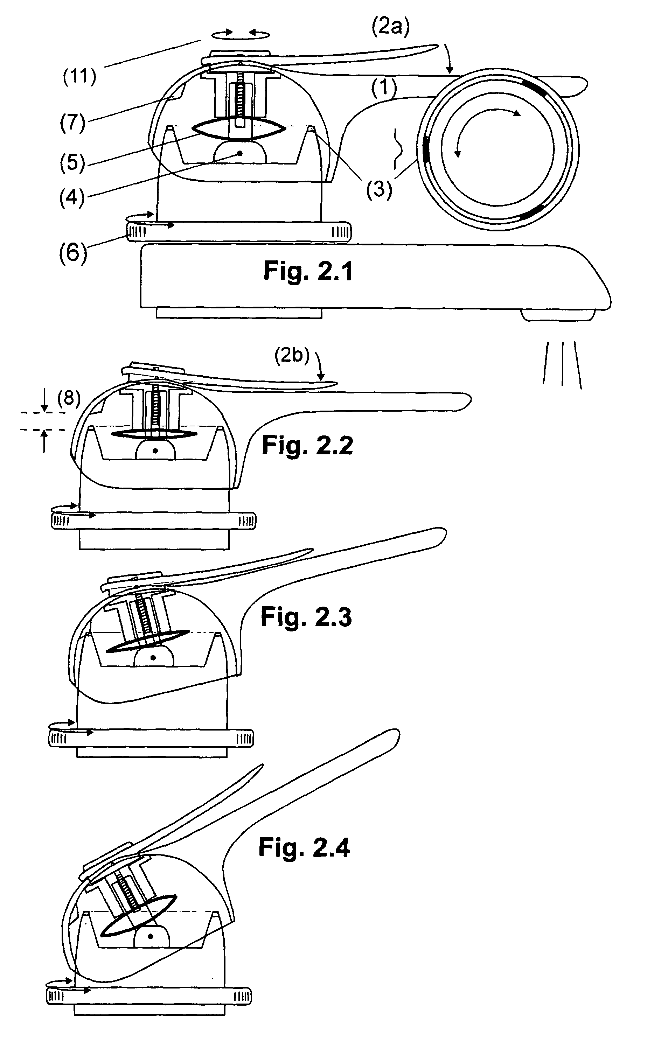

Fig. 2 : Ist der Hilfshebel oberhalb des Haupthebels angeordnet, wird bei seiner Betätigung die Abdeckkalotte des Haupthebels bspw. gegen ein Paar Tellerfedern soweit abgesenkt, daß beim Hochschwenken des Haupthebels deren innere Nase (7) am oberen Rand des Korpus der Mischbatterie (3) anstößt und so den Wasserdurchfluß begrenzt. Durch axiales Verstellen des Hilfshebels durch Hochdrehen oder Absenken auf seinem Gewindeschaft (11) läßt sich der erlaubte Schwenkwinkel (8) für die gewünschte Vorwahl der Wassermenge feinjustieren. Das Federelement, das die Kalotte des Haupthebels an den Hilfshebel fest andrückt, kann aus einer Teller-, Bügel-, Spiral- oder Scheibenfeder bestehen.
   Bezeichnungen in Fig. 2 (Hilfshebel oberhalb des Haupthebels) :
   - Fig. 1.1: Haupthebel (1) in Nullstellung, Hilfshebel in Ausgangsposition (2a), Feinjustierung des gewünschten Wasserdurchflußes durch seine Spindeldrehung (11)
   - Fig. 1.2: Hilfshebel heruntergedrückt (2b), Tellerfedern (5) zusammengepresst, definiert den Hub der Zwischenstufe (8)
   - Fig. 1.3: Haupthebel mit angedrücktem Hilfshebel bis zur Vorwahlstellung hochgeschwenkt, Nase (7) stoppt dann an (3)
   - Fig. 1.4: Haupthebel in maximaler Öffnungsstellung, Hilfshebel freigegeben, Federelement (5) entlastet, Nase (7) gleitet dann an (3) vorbei
Fig. 3 : Wird die Zwischenstufe mit einer Drucktaste (16) aktiviert, dann entsteht ebenfalls beim Hochschwenken des Haupthebels ein fester Anschlag durch das Anstoßen bspw. einer Bügelfeder gegen den oberen Rand des Korpus der Mischbatterie.
   Bezeichnungen in Fig. 3 (Drucktaste) :
   - Fig. 3.1: Drucktaste ungedrückt
   - Fig. 3.2: Drucktaste gedrückt, das eine seiner Federenden stoppt den Haupthebel in einer Zwischenstellung
   - Fig. 3.3: Drucktaste ungedrückt, Haupthebel kann unbehindert in seine maximale Öffnungsstellung geschwenkt werden
   (15) Bügelfeder, bspw. mit 6 Enden
   (16) Drucktaste, stellt sich selbsttätig zurück
   (17) Niete

## Patentansprüche

1. Mehrstufiger Einhandmisch-Wasserhahn mit einer Vorrichtung zur Wassermengen- oder Temperaturbegrenzung, **dadurch gekennzeichnet, daß** mit Hilfe eines Hilfshebels (2), der oberoder unterhalb des Haupthebels angeordnet ist, oder einer Drucktaste (16), beim Hochschwenken des Haupthebels voreinstellbare (9, 11) Sollwerte einer Zwischenstufe sofort mit einem einzigen, treffsicheren Hub gefunden werden, sonst aber alle anderen Hebelbewegungen unbehindert sind, wobei die Abdeckkalotte des Haupthebels mit einem oder mehreren Federelementen kraftschlüssig verbunden ist und zur Einstellung der Zwischenstufe mit einer Nase (7) auf ein oder mehrere Widerlager (3) am Gehäuse der Mischbatterie trifft oder vice versa.

## Claims

1. A multi-level single-hand faucet with a device to select a preferred water quantity or temperature is **characterized by** an help lever (2) or a push-button (16) above or below the main lever (1), with that one can find the set point of the selected interstage (9, 11) by a single and precise stroke, but leaves unhindered all main lever movements when is not used. If the help lever is activated however the cap of the main lever connected distance free with spring elements (5) stops with its internal nose (7) at the upper border (3) of the mixer body or vice versa.

## Revendications

1. Un mitigeur à deux pas avec un système sélectionnant une quantité de l'eau ou température préférée est **caractérisé par** un levier d'aide (2) ou un bouton (16) au-dessus ou en dessous du levier principal (1), avec lequel on peut trouver le stade intermédiaire (9, 11) sélectionné par un seul coup précis, mais permit sans restriction tous mouvements du levier principal quand on ne l'utilise pas. Quand on active le levier d'aide, le nez interne (7) de la hotte du levier principal, qui est raccordée fermement aux éléments de ressort (5), s'arrête au bord supérieure du mitigeur (3) ou vice versa.
